# EUROPEAN PATENT APPLICATION

(11) **EP 4 422 283 A1**
(43) Date of publication of application: **28.08.2024**
(21) Application number: 21960836.1
(22) Date of filing: 18.10.2021
(51) Int. Cl.: H04W 52/02, H04W 72/04

(54) **REPORTING METHOD AND APPARATUS, AND USER EQUIPMENT, NETWORK-SIDE DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2021/124475
(87) International publication number: WO 2023/065075

(57) **Abstract**

The present disclosure belongs to the technical field of communications. Provided are a reporting method and apparatus, and a user equipment, a network-side device and a storage medium. The method comprises: receiving parameter information reported by a communication device, wherein the parameter information comprises indication information and/or capability information, and the indication information is used for indicating that the communication device is a positioning reference unit (PRU). By means of the method provided in the present disclosure, a network-side device can recognize which communication devices in a network are PRUs, and understand PRU capabilities supported by the communication devices that are PRUs, such that it is ensured that a subsequent PRU-based positioning process is performed normally, thereby ensuring the accuracy of positioning.

## Description

### TECHNICAL FIELD

The disclosure relates to the field of communication technologies, more particularly, to a reporting method, a reporting apparatus, a user equipment (UE), a network device and a storage medium.

### BACKGROUND

In communication systems, in order to improve positioning accuracy, usually, a Positioning Reference Unit (PRU) is used to report positioning-related information (such as, a known position of the PRU, a measurement result of the PRU, and an uplink positioning reference signal, etc.) to a Location Management Function (LMF), and the LMF can position the PRU through the information reported by the PRU, thereby improving positioning accuracy.

In the related art, "how does the LMF know which device is the PRU", "how does the PRU report the positioning-related information to the LMF" and "how does the LMF request the PRU to report the known position of the PRU" are all technical problems that need to be solved urgently.

### SUMMARY

The disclosure provides a reporting method, a reporting apparatus, a user equipment (UE), a network device and a storage medium, to provide a method for reporting a Positioning Reference Unit (PRU)-related capability of a communication device to a network device.

According to a first aspect of embodiments of the disclosure, a reporting method is provided, which is performed by a network device. The method includes:
receiving parameter information reported by a communication device, in which the parameter information includes indication information and/or capability information, and the indication information is configured to indicate that the communication device is a PRU.

According to a second aspect of embodiments of the disclosure, a reporting method is provided, which is performed by a communication device. The method includes:
reporting parameter information to a network device, in which the parameter information includes indication information and/or capability information, and the indication information is configured to indicate that the communication device is a PRU.

According to a third aspect of embodiments of the disclosure, a reporting apparatus is provided. The apparatus includes:
a receiving module, configured to receive parameter information reported by a communication device, in which the parameter information includes indication information and/or capability information, and the indication information is configured to indicate that the communication device is a PRU.

According to a fourth aspect of embodiments of the disclosure, a reporting apparatus is provided. The apparatus includes:
a reporting module, configured to report parameter information to a network device, in which the parameter information includes indication information and/or capability information, and the indication information is configured to indicate that the communication device is a PRU.

According to a fifth aspect of embodiments of the disclosure, a communication device including a processor and a memory having a computer program stored thereon is provided. The processor executes the computer program to cause the communication device to implement the method of the embodiments of the first aspect.

According to a sixth aspect of embodiments of the disclosure, a communication device including a processor and a memory having a computer program stored thereon is provided. The processor executes the computer program to cause the device to implement the method of the embodiments of the second aspect.

According to a seventh aspect of embodiments of the disclosure, a communication device including a processor and an interface circuit is provided.

The interface circuit is configured to receive code instructions and transmit the code instructions to the processor.

The processor is configured to run the code instructions to implement the method of the embodiments of the first aspect.

According to an eighth aspect of embodiments of the disclosure, a communication device including a processor and an interface circuit is provided.

The interface circuit is configured to receive code instructions and transmit the code instructions to the processor.

The processor is configured to run the code instructions to implement the method of the embodiments of the second aspect.

According to a ninth aspect of embodiments of the disclosure, a computer readable storage medium for storing instructions is provided. When the instructions are executed, the method provided by the embodiments of the first aspect is implemented.

According to a tenth aspect of embodiments of the disclosure, a computer readable storage medium for storing instructions is provided. When the instructions are executed, the method provided by the embodiments of the second aspect is implemented.

In conclusion, in the reporting method, the reporting apparatus, the UE, the base station and the storage medium provided by the embodiments of the disclosure, the network device receives the parameter information reported by the communication device. The parameter information includes indication information and/or capability information. The indication information is configured to indicate that the communication device is a PRU, and the capability information is configured to indicate a PRU capability supported by the communication device. That is, in the embodiments of the disclosure, the communication device may report the parameter information to the network device, and the network device can determine whether the communication device is a PRU based on the parameter information reported by the communication device, and determine a PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring normal operation of a subsequent PRU-based positioning process and ensuring positioning accuracy.

### BRIEF DESCRIPTION OF THE DRAWINGS

The foregoing and/or additional aspects and advantages of the disclosure will become apparent and readily understood from the following description of embodiments in combination with the accompanying drawings, in which:
FIG. 1 is a flowchart of a reporting method provided by an embodiment of the disclosure.
FIG. 2 is a flowchart of a reporting method provided by an embodiment of the disclosure.
FIG. 3 is a flowchart of a reporting method provided by an embodiment of the disclosure.
FIG. 4 is a flowchart of a reporting method provided by an embodiment of the disclosure.
FIG. 5 is a flowchart of a reporting method provided by an embodiment of the disclosure.
FIG. 6 is a flowchart of a reporting method provided by an embodiment of the disclosure.
FIG. 7 is a flowchart of a reporting method provided by an embodiment of the disclosure.
FIG. 8 is a flowchart of a reporting method provided by an embodiment of the disclosure.
FIG. 9 is a flowchart of a reporting method provided by an embodiment of the disclosure.
FIG. 10 is a flowchart of a reporting method provided by an embodiment of the disclosure.
FIG. 11 is a flowchart of a reporting method provided by an embodiment of the disclosure.
FIG. 12 is a flowchart of a reporting method provided by an embodiment of the disclosure.
FIG. 13 is a flowchart of a reporting method provided by an embodiment of the disclosure.
FIG. 14 is a flowchart of a reporting method provided by an embodiment of the disclosure.
FIG. 15 is a schematic diagram of a reporting apparatus provided by an embodiment of the disclosure.
FIG. 16 is a schematic diagram of a reporting apparatus provided by an embodiment of the disclosure.
FIG. 17 is a block diagram of a user equipment (UE) provided by an embodiment of the disclosure.
FIG. 18 is a block diagram of a network device provided by an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the embodiments of the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

A reporting method, a reporting apparatus, a user equipment (UE), a network device and a storage medium provided by embodiments of the disclosure are described in detail below with reference to the accompanying drawings.

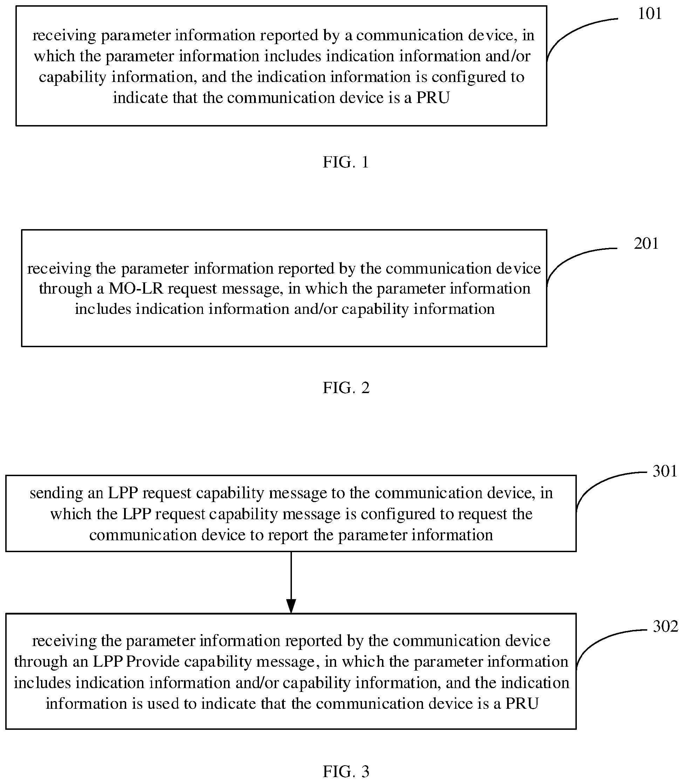

FIG. 1 is a flowchart of a reporting method provided by an embodiment of the disclosure. The method is performed by a network device. As illustrated in FIG. 1, the reporting method includes the following steps.

At step 101, parameter information reported by a communication device is received, in which the parameter information includes indication information and/or capability information.

In an embodiment of the disclosure, the network device may be a Location Management Function (LMF).

In an embodiment of the disclosure, the communication device can be a UE or a positioning reference unit (PRU).

In an embodiment of the disclosure, the UE may be a device that provides voice and/or data connectivity to a user. The UE may communicate with one or more core networks via a Radio Access Network (RAN). The UE may be an Internet of Things (IoT) terminal, such as a sensor device, a cell phone (or "cellular" phone), and a computer with an IoT terminal. The UE may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Or, the UE may be an unmanned aerial vehicle device. Or, the UE may be an in-vehicle device, for example, an electronic control unit (ECU) having a wireless communication function, or a wireless terminal external to the ECU. Or, the UE can also be a roadside device, for example, a street light, a signal light, or other roadside devices having a wireless communication function.

In an embodiment of the disclosure, the PRU may be a network element in a network or a certain UE. For the PRU, its own location information is known. The PRU can support some positioning-related measurements, such as a Reference Signal Time Difference (RSTD) measurement, a Reference Signal Received Power (RSRP) measurement, and a receive-transport (Rx-Tx) timing difference measurement, etc., and it can send an uplink positioning reference signal.

In an embodiment of the disclosure, the indication information can be used to indicate that the communication device is the PRU.

In an embodiment of the disclosure, the above capability information may be used to indicate a PRU capability supported by the communication device. The capability information may include at least one of the following:

the communication device supporting reporting a known position of the communication device;

the communication device supporting reporting antenna information of the communication device;
a change situation of the known position of the communication device; or
a movement state of the communication device.

In an embodiment of the disclosure, the above-mentioned known position of the communication device is a position of the communication device that has already been known by the communication device, and is not a position calculated by the communication device based on its positioning function.

In an embodiment of the disclosure, the antenna information of the communication device includes at least one of the following:
a direction of an antenna of the communication device; or
an angle of the antenna of the communication device.

In an embodiment of the disclosure, the change situation of the known position of the communication device may include:
the known position remaining unchanged; or
the known position changing periodically and changing a cycle.

In an embodiment of the disclosure, the movement state of the communication device includes:
a stationary state;
a semi-stationary state; or
a periodic movement and a movement cycle.

It is noted that in an embodiment of the disclosure, when a communication device is a PRU, the communication device may report the parameter information to the network device to notify the network device that the communication device is a PRU and the PRU capability the communication device supports.

In an embodiment of the disclosure, the communication device may report the parameter information to the network device based on a request of the network device. In another embodiment of the disclosure, the communication device may directly report the parameter information to the network device without a request from the network device.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 2 is a flowchart of a reporting method provided by an embodiment of the disclosure. The method is performed by a network device. As illustrated in FIG. 2, the reporting method includes the following steps.

At step 201, parameter information reported by a communication device through a Mobile Original-Location Request (MO-LR) request message is received, in which the parameter information includes indication information and/or capability information.

In an embodiment of the disclosure, the indication information is configured to indicate that the communication device is a PRU. The capability information may be used to indicate a PRU capability supported and provided by the communication device. Other descriptions of the indication information and the capability information can be referred to the above embodiments, which will not be repeated in the embodiments of the disclosure.

It is noted that, in an embodiment of the disclosure, the communication device can report the parameter information directly to the network device through the MO-LR request message.

In an embodiment of the disclosure, a method for receiving the parameter information reported by the communication device through the MO-LR request message includes at least one of the following ways.

In a first way, the parameter information included in the MO-LR request message is received. That is, the parameter information is directly included in the MO-LR request message. For example, in an embodiment of the disclosure, a new positioning service type may be defined in the MO-LR request message to indicate the parameter information. The parameter information includes indication information for indicating that the communication device is a PRU.

In a second way, the parameter information included in a Long Term Evolution Positioning Protocol (LPP) Packet Data Unit (PDU) of the MO-LR request message is received.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 3 is a flowchart of a reporting method provided by an embodiment of the disclosure. The method is performed by a network device. As illustrated in FIG. 3, the reporting method includes the following steps.

At step 301, an LPP request capability message is sent to a communication device, in which the LPP request capability message is configured to request the communication device to report parameter information.

In an embodiment of the disclosure, the LPP request capability message may carry a request indication message. The request indication message may be used for indicating that the LPP request capability message is used to request the communication device to report the parameter information.

In an embodiment of the disclosure, an Information Element (IE) can be added to the LPP request capability message to indicate the request indication message. The IE can be nr-PRU-Requestcapabilities.

At step 302, parameter information reported by the communication device through an LPP Provide capability message is received, in which the parameter information includes indication information and/or capability information, and the indication information is used to indicate that the communication device is a PRU.

In an embodiment of the disclosure, the communication device may carry the parameter information in the LPP Provide capability message and report it to the network device.

Relevant description of the indication information and/or the capability information can be described with reference to the preceding embodiments, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs", thereby ensuring a normal operation of a subsequent PRU-based positioning process and ensuring positioning accuracy.

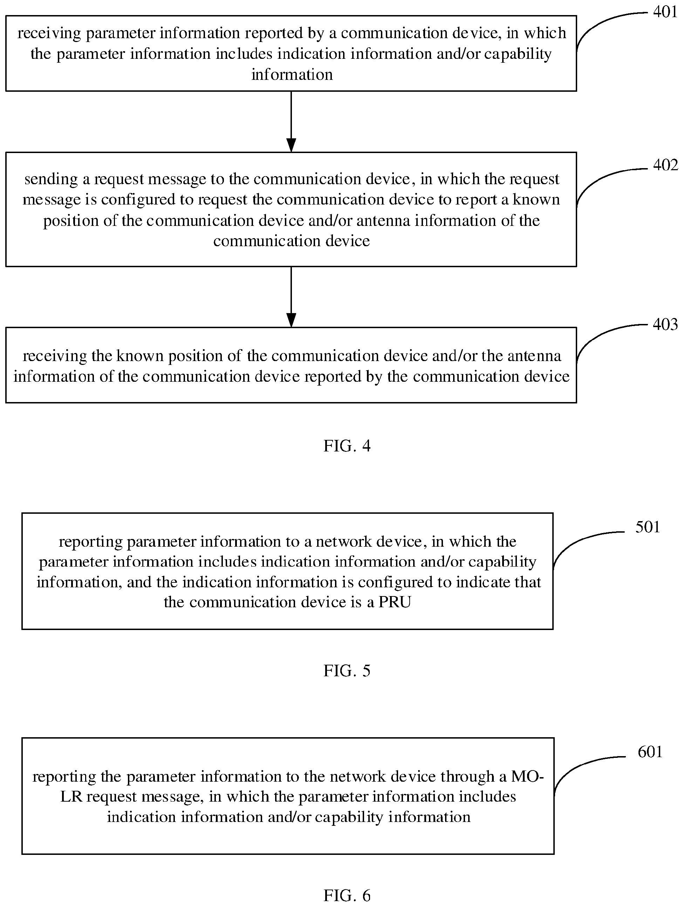

FIG. 4 is a flowchart of a reporting method provided by an embodiment of the disclosure. The method is performed by a network device. As illustrated in FIG. 4, the reporting method includes the following steps.

At step 401, parameter information reported by a communication device is received, in which the parameter information includes indication information and/or capability information.

At step 402, a request message is sent to the communication device, in which the request message is configured to request the communication device to report a known position of the communication device and/or antenna information of the communication device.

In an embodiment of the disclosure, when the network device determines that the communication device supports reporting the known position of the communication device and reporting the antenna information of the communication device, it may send the request message to the communication device to request the known position and/or the antenna information of the communication device.

In an embodiment of the disclosure, the request message may be an LPP request location information message. In an embodiment of the disclosure, the communication device may be requested to report the known position of the communication device and/or the antenna information of the communication device by newly adding an IE in the LPP request location information message.

It is noted that, in an embodiment of the disclosure, a method for sending the LPP request location information message to the communication device may include:
in response to a periodic change or no change in the known position of the communication device, sending the LPP request location information message to the communication device.

In detail, in an embodiment of the disclosure, if a change situation of the known position of the communication device is that the known position changes periodically, the network device may periodically send the LPP request location information message to the communication device based on a change cycle of the known position, to request the known position of the communication device and/or the antenna information of the communication device.

For example, in an embodiment of the disclosure, if a change situation of the known position of the communication device is that the known position changes periodically and the change cycle is 15 minutes, the network device can send the LPP request location information message to the communication device every 15 minutes.

In another embodiment of the disclosure, if a change situation of the known position of the communication device is that the known position remains unchanged, the network device may send the LPP request location information message to the communication device only once to request the known position of the communication device and/or the antenna information of the communication device.

At step 403, the known position of the communication device and/or the antenna information of the communication device reported by the communication device is received.

In an embodiment of the disclosure, the network device can receive the known position of the communication device and/or the antenna information of the communication device reported by the communication device through an LPP provide location information message.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 5 is a flowchart of a reporting method provided by an embodiment of the disclosure. The method is performed by a communication device. As illustrated in FIG. 5, the reporting method includes the following steps.

At step 501, parameter information is reported to a network device, in which the parameter information includes indication information and/or capability information, and the indication information is configured to indicate that the communication device is a PRU.

In an embodiment of the disclosure, the indication information is used to indicate that the communication device is a PRU.

In an embodiment of the disclosure, the above capability information may be used to indicate a PRU capability supported by the communication device. The capability information may include at least one of the following:
the communication device supporting reporting a known position of the communication device;
the communication device supporting reporting antenna information of the communication device;
a change situation of the known position of the communication device; or
a movement state of the communication device.

In an embodiment of the disclosure, the above-mentioned known position of the communication device is a position of the communication device that has already been known by the communication device.

In an embodiment of the disclosure, the antenna information of the communication device includes at least one of the following:
a direction of an antenna of the communication device; or
an angle of the antenna of the communication device.

In an embodiment of the disclosure, the change situation of the known position of the communication device may include:
the known position remaining unchanged; or
the known position changing periodically and changing a cycle.

In an embodiment of the disclosure, the movement state of the communication device includes:
a stationary state;
a semi-stationary state; and
a periodic movement and a movement cycle.

In an embodiment of the disclosure, the communication device is a UE or a PRU.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 6 is a flowchart of a reporting method provided by an embodiment of the disclosure. The method is performed by a communication device. As illustrated in FIG. 6, the reporting method includes the following steps.

At step 601, parameter information is reported to a network device through a MO-LR request message, in which the parameter information includes indication information and/or capability information.

In an embodiment of the disclosure, the indication information may be used to indicate that the communication device is a PRU. The capability information may be used to indicate a PRU capability provided and supported by the communication device. Other descriptions of the indication information and/or the capability information can be described with reference to the preceding embodiments, which will not be repeated in the embodiments of the disclosure.

It is noted that, in an embodiment of the disclosure, the communication device can report the parameter information directly to the network device through the MO-LR request message.

In an embodiment of the disclosure, a method for reporting the parameter information to the network device through the MO-LR request message includes at least one of the following ways.

In a first way, the parameter information is directly included in the MO-LR request message and can be reported to the network device through the MO-LR request message. For example, in an embodiment of the disclosure, a new positioning service type may be defined in the MO-LR request message to indicate the parameter information. The parameter information includes indication information for indicating that the communication device is a PRU.

In a second way, the parameter information is included in an LPP PDU of the MO-LR request message, and the parameter information is reported to the network device through the MO-LR request message.

The introduction of step 601 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

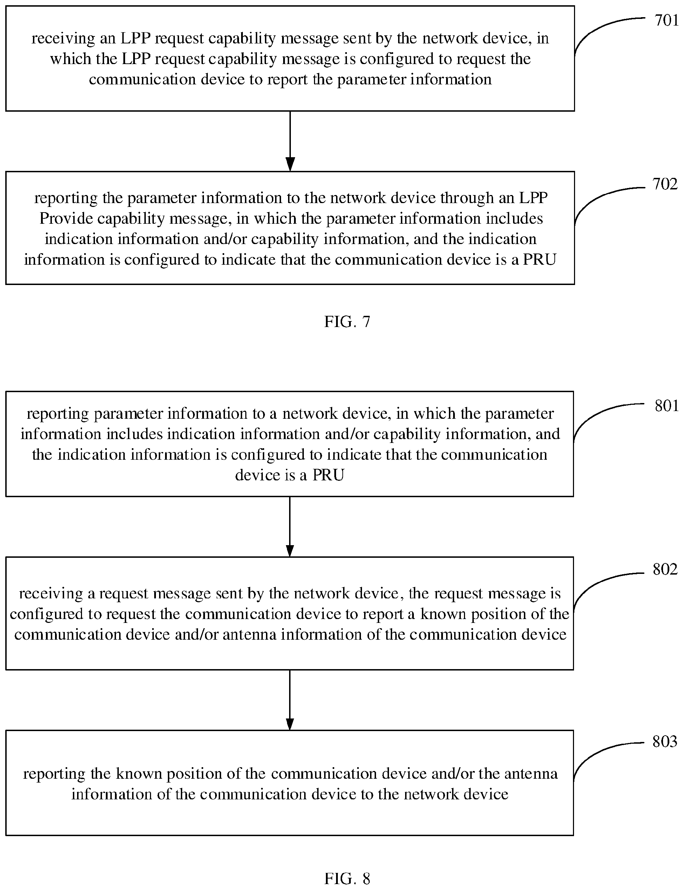

FIG. 7 is a flowchart of a reporting method provided by an embodiment of the disclosure. The method is performed by a communication device. As illustrated in FIG. 7, the reporting method includes the following steps.

At step 701, an LPP request capability message sent by a network device is received, in which the LPP request capability message is configured to request the communication device to report the parameter information.

At step 702, the parameter information is reported to the network device through an LPP Provide capability message, in which the parameter information includes indication information and/or capability information, and the indication information is configured to indicate that the communication device is a PRU.

The introductions of steps 701-702 can be described with reference to the embodiments described above, which will not be repeated in the embodiments of the disclosure.

In conclusion, in the reporting method provided in the embodiments of the disclosure, the parameter information reported by the communication device is received. The parameter information includes the indication information and/or the capability information, and the indication information is used to indicate that the communication device is a PRU. In the embodiments of the disclosure, the capability information includes at least one of the following: the communication device supporting reporting a known position of the communication device; the communication device supporting reporting antenna information of the communication device; a change situation of the known position of the communication device; or a movement state of the communication device. Therefore, when the network device receives the parameter information reported by the communication device, the network device can perform accurate positioning based on the indication information and/or the capability information in the parameter information, thereby ensuring improvement of positioning accuracy.

FIG. 8 is a flowchart of a reporting method provided by an embodiment of the disclosure. The method is performed by a communication device. As illustrated in FIG. 8, the reporting method includes the following steps.

At step 801, parameter information is reported to a network device, in which the parameter information includes indication information and/or capability information, and the indication information is configured to indicate that the communication device is a PRU.

At step 802, a request message sent by the network device is received, the request message is configured to request the communication device to report a known position of the communication device and/or antenna information of the communication device.

In an embodiment of the disclosure, the request message may be an LPP request location information message. In an embodiment of the disclosure, the communication device may be requested to report the known position of the communication device and/or the antenna information of the communication device by newly adding an IE in the LPP request location information message.

At step 803, the known position of the communication device and/or the antenna information of the communication device is reported to the network device.

In an embodiment of the disclosure, the network device can receive the known position of the communication device and/or the antenna information of the communication device reported by the communication device through an LPP provide location information message.

The introductions of steps 801-803 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

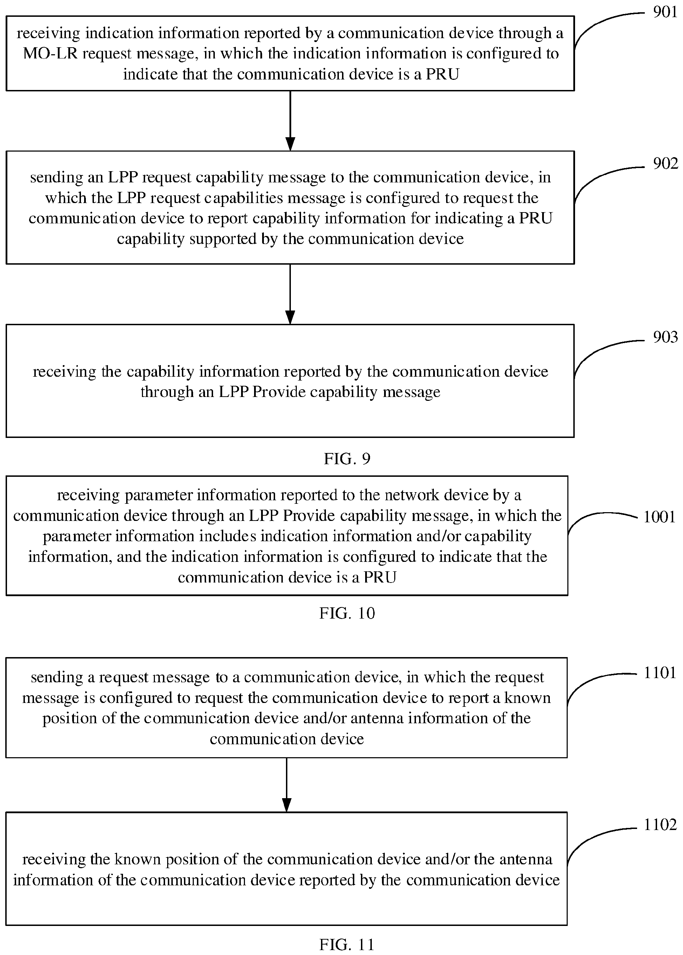

FIG. 9 is a flowchart of a reporting method provided by an embodiment of the disclosure. The method is performed by a network device. As illustrated in FIG. 9, the reporting method includes the following steps.

At step 901, indication information reported by a communication device through a MO-LR request message is received, in which the indication information is configured to indicate that the communication device is a PRU.

At step 902, an LPP request capability message is sent to the communication device, in which the LPP request capability message is configured to request the communication device to report capability information for indicating a PRU capability supported by the communication device.

In an embodiment of the disclosure, the capability information may include at least one of the following:
the communication device supporting reporting a known position of the communication device;
the communication device supporting reporting antenna information of the communication device;
a change situation of the known position of the communication device; or
a movement state of the communication device.

At step 903, the capability information reported by the communication device through an LPP Provide capability message is received.

The introductions of steps 901-903 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 10 is a flowchart of a reporting method provided by an embodiment of the disclosure. The method is performed by a network device. As illustrated in FIG. 10, the reporting method includes the following steps.

At step 1001, parameter information reported to the network device by a communication device through an LPP Provide capability message is received, in which the parameter information includes indication information and/or capability information, and the indication information is configured to indicate that the communication device is a PRU.

In an embodiment of the disclosure, the communication device can directly report the above parameter information by sending the LPP Provide capability message to the network device without a request from the network device.

The introduction of step 1001 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 11 is a flowchart of a reporting method provided by an embodiment of the disclosure. The method is performed by a network device. As illustrated in FIG. 11, the reporting method includes the following steps.

At step 1101, a request message is sent to a communication device, in which the request message is configured to request the communication device to report a known position of the communication device and/or antenna information of the communication device.

At step 1102, the known position of the communication device and/or the antenna information of the communication device reported by the communication device is received.

The introductions of steps 1101-1102 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

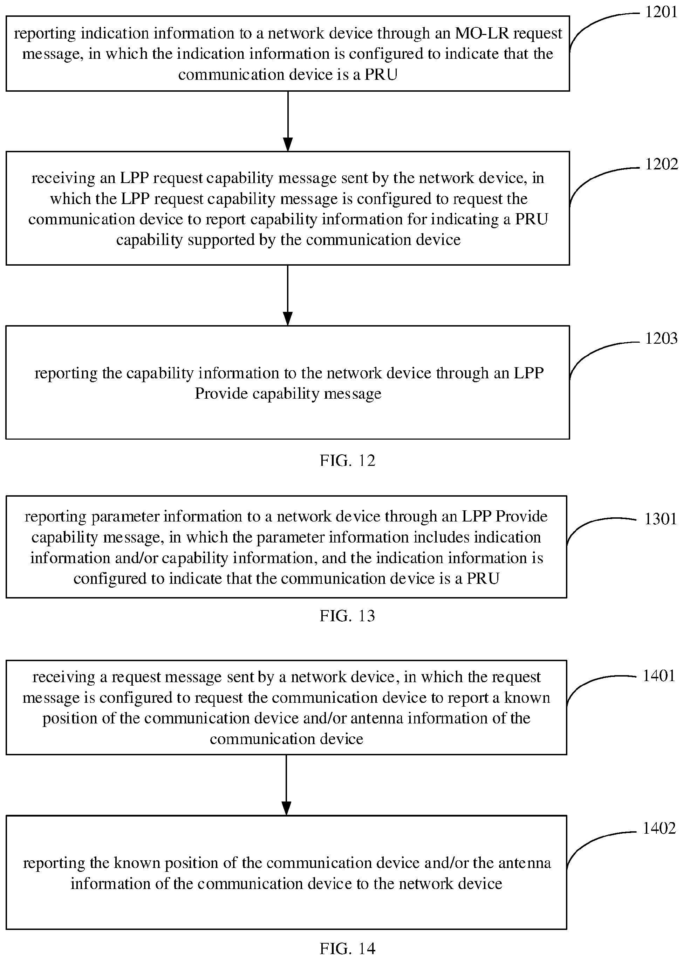

FIG. 12 is a flowchart of a reporting method provided by an embodiment of the disclosure. The method is performed by a communication device. As illustrated in FIG. 12, the reporting method includes the following steps.

At step 1201, indication information is reported to a network device through an MO-LR request message, in which the indication information is configured to indicate that the communication device is a PRU.

At step 1202, an LPP request capability message sent by the network device is received, in which the LPP request capability message is configured to request the communication device to report capability information for indicating a PRU capability supported by the communication device.

In an embodiment of the disclosure, the capability information includes at least one of the following:
the communication device supporting reporting a known position of the communication device;
the communication device supporting reporting antenna information of the communication device;
a change situation of the known position of the communication device; or
a movement state of the communication device.

At step 1203, the capability information is reported to the network device through an LPP Provide capability message.

The introductions of steps 1201-1202 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 13 is a flowchart of a reporting method provided by an embodiment of the disclosure. The method is performed by a communication device. As illustrated in FIG. 13, the reporting method includes the following steps.

At step 1301, parameter information is reported to a network device through an LPP Provide capability message, in which the parameter information includes indication information and/or capability information, and the indication information is configured to indicate that the communication device is a PRU.

The introduction of step 1301 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

FIG. 14 is a flowchart of a reporting method provided by an embodiment of the disclosure. The method is performed by a communication device. As illustrated in FIG. 14, the reporting method includes the following steps.

At step 1401, a request message sent by a network device is received, in which the request message is configured to request the communication device to report a known position of the communication device and/or antenna information of the communication device.

At step 1402, the known position of the communication device and/or the antenna information of the communication device is reported to the network device.

The introductions of steps 1401-1402 can be described with reference to the embodiments described above, which will not be repeated in the embodiments of the disclosure.

In conclusion, in the reporting method provided in the embodiments of the disclosure, the network device receives the parameter information reported by the communication device. The parameter information includes the indication information and/or the capability information. The indication information is used to indicate that the communication device is a PRU, and the capability information is used to indicate the PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capability supported by the communication devices that are PRUs, thereby ensuring a normal operation of a subsequent PRU-based positioning process and ensuring positioning accuracy.

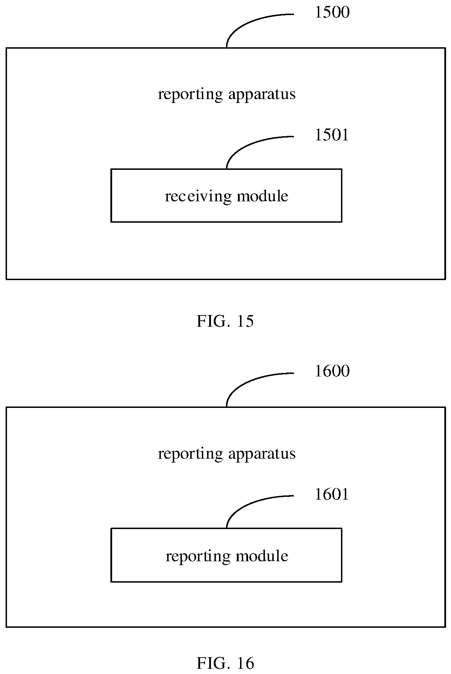

FIG. 15 is a schematic diagram of a reporting apparatus 1500 provided by an embodiment of the disclosure. The apparatus can be applied to a network device. As illustrated in FIG. 15, the reporting apparatus 1500 includes:
a receiving module 1501, configured to receive parameter information reported by a communication device, in which the parameter information includes indication information and/or capability information, and the indication information is configured to indicate that the communication device is a PRU.

In conclusion, with the reporting apparatus provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

Optionally, in an embodiment of the disclosure, the capability information includes at least one of the following:
the communication device supporting reporting a known position of the communication device;
the communication device supporting reporting antenna information of the communication device;
a change situation of the known position of the communication device; or
a movement state of the communication device.

Optionally, in an embodiment of the disclosure, the receiving module is further configured to:
receive the parameter information reported by the communication device through a MO-LR request message.

Optionally, in an embodiment of the disclosure, the receiving module is further configured to:
receive the parameter information included in the MO-LR request message; or
receive the parameter information included in an LPP PDU of the MO-LR request message.

Optionally, in an embodiment of the disclosure, the apparatus is further configured to:
send an LPP request capability message to the communication device, in which the LPP request capability message is configured to request the communication device to report the parameter information.

Optionally, in an embodiment of the disclosure, the receiving module is further configured to:
receive the parameter information reported by the communication device through an LPP Provide capability message.

Optionally, in an embodiment of the disclosure, the apparatus is further configured to:
send an LPP request location information message to the communication device, in which the LPP request location information message is configured to request the communication device to report a known position of the communication device and/or antenna information of the communication device.

Optionally, in an embodiment of the disclosure, the apparatus is further configured to:
in response to a periodic change or no change in the known position of the communication device, send the LPP request location information message to the communication device.

Optionally, in an embodiment of the disclosure, the apparatus is further configured to:
receive the known position of the communication device and/or the antenna information of the communication device reported by the communication device through an LPP provide location information message.

Optionally, in an embodiment of the disclosure, the communication device is a UE or a PRU.

FIG. 16 is a schematic diagram of a reporting apparatus 1600 provided by an embodiment of the disclosure. The apparatus is applied to a communication device. As illustrated in FIG. 16, the reporting apparatus 1600 includes:
a reporting module 1601, configured to report parameter information to a network device, in which the parameter information includes indication information and/or capability information, and the indication information is configured to indicate that the communication device is a PRU.

In conclusion, with the reporting apparatus provided in the embodiments of the disclosure, the network device receives the parameter information reported by the communication device. The parameter information includes the indication information and/or the capability information. The indication information is used to indicate that the communication device is a PRU, and the capability information is used to indicate a PRU capability supported by the communication device. That is, in the embodiments of the disclosure, the communication device may report the parameter information to the network device. Based on the parameter information reported by the communication device, the network device may be able to know whether or not the communication device is a PRU, and the PRU capability supported by the communication device when the communication device is a PRU. Therefore, the disclosure proposes a reporting method that enables the network device to know which communication devices in the network are PRUs and PRU capabilities supported by the communication devices that are PRUs, thereby ensuring a normal operation of a subsequent PRU-based positioning process and ensuring positioning accuracy.

Optionally, in an embodiment of the disclosure, the capability information includes at least one of the following:
the communication device supporting reporting a known position of the communication device;
the communication device supporting reporting antenna information of the communication device;
a change situation of the known position of the communication device; or
a movement state of the communication device.

Optionally, in an embodiment of the disclosure, the reporting module is further configured to:
report the parameter information to the network device through a MO-LR request message.

Optionally, in an embodiment of the disclosure, the reporting module is further configured to:
carry the parameter information in the MO-LR request message, and send the MO-LR request message to the network device; or
carry the parameter information in a LPP PDU of the MO-LR request message, and send the MO-LR request message to the network device.

Optionally, in an embodiment of the disclosure, the apparatus is further configured to:
receive an LPP request capability message sent by the network device, in which the LPP request capability message is configured to request the communication device to report the parameter information.

Optionally, in an embodiment of the disclosure, the reporting module is further configured to:
report the parameter information to the network device through an LPP Provide capability message.

Optionally, in an embodiment of the disclosure, the apparatus is further configured to:
receive an LPP request location information message sent by the network device, in which the LPP request location information message is configured to request the communication device to report a known position of the communication device and/or antenna information of the communication device.

Optionally, in an embodiment of the disclosure, the apparatus is further configured to:
report the known position of the communication device and/or the antenna information of the communication device to the network device.

Optionally, in an embodiment of the disclosure, the apparatus is further configured to:
report the known position of the communication device and/or the antenna information of the communication device to the network device through an LPP provide location information message.

Optionally, in an embodiment of the disclosure, the communication device is a UE or a PRU.

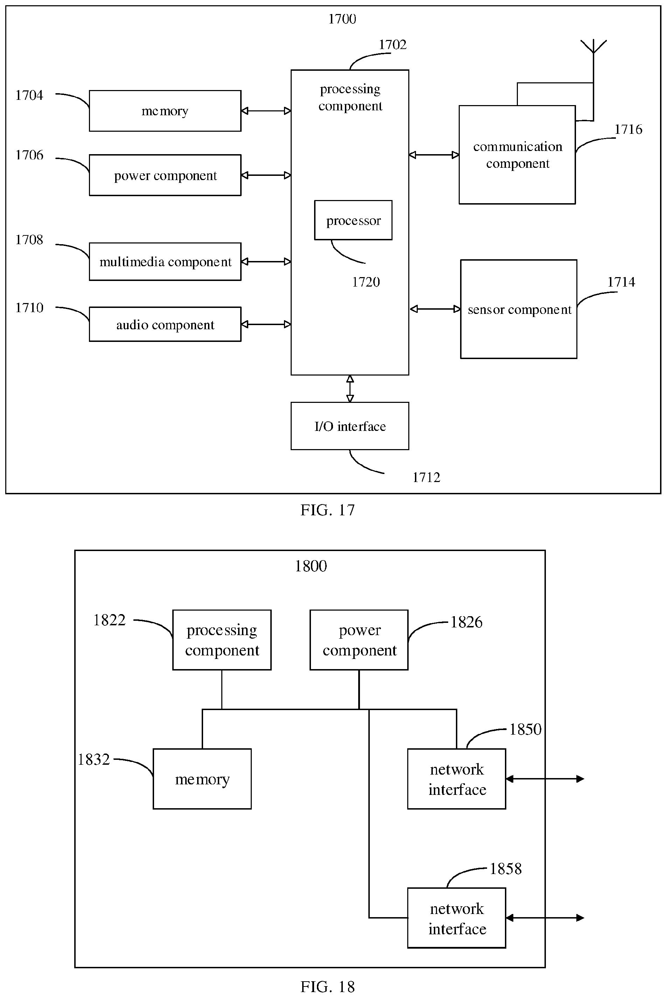

FIG. 17 is a block diagram of a UE 1700 provided by an embodiment of the disclosure. For example, the UE 1700 may be a mobile phone, a computer, a digital broadcasting terminal, a message transceiver device, a game console, a tablet device, a medical device, a fitness device and a personal digital assistant.

As illustrated in FIG. 17, the UE 1700 may include at least one of the following components: a processing component 1702, a memory 1704, a power component 1706, a multimedia component 1708, an audio component 1710, an input/output (I/O) interface 1712, a sensor component 1713, and a communication component 1716.

The processing component 1702 typically controls overall operations of the UE 1700, such as the operations associated with display, telephone calls, data communications, camera operations, and recording operations. The processing component 1702 may include at least one processor 1720 to execute instructions to execute instructions to perform all or part of the steps in the above described method. Moreover, the processing component 1702 may include at least one module which facilitates the interaction between the processing component 1702 and other components. For example, the processing component 1702 may include a multimedia module to facilitate the interaction between the multimedia component 1708 and the processing component 1702.

The memory 1704 is configured to store various types of data to support the operation of the UE 1700. Examples of such data include instructions for any applications or methods operated on the UE 1700, contact data, phonebook data, messages, pictures, videos, etc. The memory 1704 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1706 provides power to various components of the UE 1700. The power component 1706 may include a power management system, at least one power source, and any other components associated with the generation, management, and distribution of power in the UE 1700.

The multimedia component 1708 includes a screen providing an output interface between the UE 1700 and a user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a wake up duration and a pressure associated with the touch or swipe action. In some embodiments, the multimedia component 1708 includes a front-facing camera and/or a rear-facing camera. When the UE 1700 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1710 is configured to output and/or input audio signals. For example, the audio component 1710 includes a microphone (MIC) configured to receive an external audio signal when the UE 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1713 includes at least one sensor to provide status assessments of various aspects of the UE 1700. For instance, the sensor component 1713 may detect an open/closed status of the UE 1700, relative positioning of components, e.g., the display and the keypad, of the UE 1700, a change in position of the UE 1700 or a component of the UE 1700, a presence or absence of a user contact with the UE 1700, an orientation or an acceleration/deceleration of the UE 1700, and a change in temperature of the UE 1700. The sensor component 1713 may include a proximity sensor configured to detect the presence of nearby objects without any physical contact. The sensor component 1713 may also include a light sensor, such as a Complementary Metal Oxide Semiconductor (CMOS) or a Charge-Coupled Device (CCD) image sensor, for use in imaging applications. In some embodiments, the sensor component 1713 may also include an accelerometer sensor, a gyroscope sensor, a magnetic sensor, a pressure sensor, or a temperature sensor.

The communication component 1716 is configured to facilitate communication, wired or wirelessly, between the UE 1700 and other devices. The UE 1700 can access a wireless network based on a communication standard, such as Wi-Fi, 2G or 3G, or a combination thereof. In an embodiment, the communication component 1716 receives a broadcast signal from an external broadcast management system or broadcast associated information via a broadcast channel. In an embodiment, the communication component 1716 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In an exemplary embodiment, the UE 1700 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described method.

FIG. 18 is a block diagram of a network device 1800 provided by an embodiment of the disclosure. For example, the network device 1800 may be provided as a network device. As illustrated in FIG. 18, the network device 1800 includes a processing component 1811, which further includes at least one processor, and memory resources represented by a memory 1832 for storing instructions that may be executed by a processing component 1822, such as an application program. The application program stored in the memory 1832 may include one or more modules each corresponding to a set of instructions. In addition, the processing component 1810 is configured to execute instructions to perform any methods performed by the network device as described in the foregoing methods, e.g., the method shown in FIG. 1.

The network device 1800 may also include a power component 1826 configured to perform power management of the network device 1800, a wired or wireless network interface 1850 configured to connect the network device 1800 to a network, and an input/output (I/O) interface 1858. The network device 1800 may operate based on an operating system stored in the memory 1832, such as Windows Server TM, Mac OS XTM, Unix TM, Linux TM, Free BSDTM or the like.

In the above embodiments of the disclosure, the methods provided in the embodiments of the disclosure are described from the perspectives of the network device and the UE, respectively. In order to realize each of the functions in the methods provided by the above embodiments of the disclosure, the network device and the UE may include a hardware structure, a software module, and realize each of the above functions in the form of the hardware structure, the software module, or a combination of the hardware structure and the software module. A certain function of the above functions may be performed in the form of the hardware structure, the software module, or a combination of the hardware structure and the software module.

In the above embodiments of the disclosure, the methods provided in the embodiments of the disclosure are described from the perspectives of the network device and the UE, respectively. In order to realize each of the functions in the methods provided by the above embodiments of the disclosure, the network device and the UE may include a hardware structure, a software module, and realize each of the above functions in the form of the hardware structure, the software module, or a combination of the hardware structure and the software module. A certain function of the above functions may be performed in the form of the hardware structure, the software module, or a combination of the hardware structure and the software module.

Embodiments of the disclosure provide a communication device. The communication device may include a transceiver module and a processing module. The transceiver module may include a sending module and/or a receiving module. The sending module is used for realizing a sending function, and the receiving module is used for realizing a receiving function. The transceiver module may realize the sending function and/or the receiving function.

The communication device may be a terminal device (e.g., the terminal device in the foregoing method embodiments), a device in the terminal device, or a device that can be used in combination with the terminal device. Alternatively, the communication device may be a network device, a device in the network device, or a device that can be used in combination with the network device.

Embodiments of the disclosure provides another communication device. The communication device may be a network device or a terminal device (e.g., the terminal device in the above method embodiments), or may be a chip, a chip system or a processor that supports the network device to realize the above-described methods, or may be a chip, a chip system or a processor that supports the terminal device to realize the above-described methods. The device may be used to realize the methods described in the above method embodiments, which may refer to the description of the above-described method embodiments.

The communication device may include one or more processors. The processor may be a general purpose processor or a dedicated processor, such as, a baseband processor and a central processor. The baseband processor is used for processing communication protocols and communication data. The central processor is used for controlling the communication device (e.g., a network device, a baseband chip, a terminal device, a terminal device chip, a central unit (CU), or a distributed unit (DU)), executing computer programs, and processing data of the computer programs.

Optionally, the communication device may include one or more memories on which computer programs may be stored. The processor executes the computer programs to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, for realizing a receiving function. The transmitter may be referred to as a transmitter machine or a transmitting circuit, for realizing a transmitting function.

Optionally, the communication device may also include one or more interface circuits. The interface circuits are used to receive code instructions and transmit them to the processor. The processor runs the code instructions to cause the communication device to perform the method described in the method embodiments.

The communication device is a terminal device (such as the terminal device in the preceding method embodiments). The processor is used to perform the method shown in any of FIGS. 1-4.

The communication device is a network device. The transceiver is used to perform the method shown in any of FIGS. 5-7.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device is caused to perform the methods described in the method embodiments above. The computer program may be solidified in the processor, and in such case the processor may be implemented by hardware.

In an implementation, the communication device may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal device (e.g., the terminal device in the preceding method embodiments), but the scope of the communication device described in the disclosure is not limited thereto, and the structure of the communication device may not be limited. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

The communication device may be a chip or a chip system. The chip includes a processor and an interface. There may be one or more processors, and there may be multiple interfaces.

Optionally, the chip further includes a memory used to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

Embodiments of the disclosure also provide a system. The system includes a communication device as a terminal device in the foregoing embodiments (such as the first terminal device in the foregoing method embodiments) and a communication device as a network device. Alternatively, the system includes a communication device as a terminal device in the foregoing embodiments (such as the first terminal device in the foregoing method embodiments) and a communication device as a network device.

The disclosure also provides a readable storage medium having instructions stored thereon. When the instructions are executed by a computer, the functions of any of the above method embodiments are implemented.

The disclosure also provides a computer program product. When the computer program product is executed by a computer, the functions of any of the above method embodiments are implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, nor used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A reporting method, performed by a network device, comprising:
receiving parameter information reported by a communication device, wherein the parameter information comprises indication information and/or capability information, and the indication information is configured to indicate that the communication device is a positioning reference unit (PRU).

2. The method of claim 1, wherein the capability information comprises at least one of:
the communication device supporting reporting a known position of the communication device;
the communication device supporting reporting antenna information of the communication device;
a change situation of the known position of the communication device; or
a movement state of the communication device.

3. The method of claim 2, wherein receiving the parameter information reported by the communication device comprises:
receiving the parameter information reported by the communication device through a Mobile Original-Location Request (MO-LR) request message.

4. The method of claim 3, wherein receiving the parameter information reported by the communication device through the MO-LR request message comprises at least one of:
receiving the parameter information included in the MO-LR request message; or
receiving the parameter information included in a Long Term Evolution Positioning Protocol Packet Data Unit (LPP PDU) of the MO-LR request message.

5. The method of claim 1 or 2, further comprising:
sending a Long Term Evolution Positioning Protocol (LPP) request capability message to the communication device, wherein the LPP request capability message is configured to request the communication device to report the parameter information.

6. The method of claim 5, wherein receiving the parameter information reported by the communication device comprises:
receiving the parameter information reported by the communication device through an LPP Provide capability message.

7. The method of claim 3 or 6, further comprising:
sending an LPP request location information message to the communication device, wherein the LPP request location information message is configured to request the communication device to report a known position of the communication device and/or antenna information of the communication device.

8. The method of claim 7, wherein sending the LPP request location information message to the communication device comprises:
in response to a periodic change or no change in the known position of the communication device, sending the LPP request location information message to the communication device.

9. The method of claim 7, further comprising:
receiving the known position of the communication device and/or the antenna information of the communication device reported by the communication device.

10. The method of claim 9, wherein receiving the known position of the communication device and/or the antenna information of the communication device reported by the communication device comprises:
receiving the known position of the communication device and/or the antenna information of the communication device reported by the communication device through an LPP provide location information message.

11. The method of any one of claims 1-10, wherein the communication device comprises a user equipment (UE) or a PRU.

12. A reporting method, performed by a communication device, comprising:
reporting parameter information to a network device, wherein the parameter information comprises indication information and/or capability information, and the indication information is configured to indicate that the communication device is a positioning reference unit (PRU).

13. The method of claim 12, wherein the capability information comprises at least one of:
the communication device supporting reporting a known position of the communication device;
the communication device supporting reporting antenna information of the communication device;
a change situation of the known position of the communication device; or
a movement state of the communication device.

14. The method of claim 13, wherein reporting the parameter information to the network device comprises:
reporting the parameter information to the network device through a Mobile Original-Location Request (MO-LR) request message.

15. The method of claim 14, wherein reporting the parameter information to the network device through the MO-LR request message comprises at least one of:
carrying the parameter information in the MO-LR request message, and sending the MO-LR request message to the network device; or
carrying the parameter information in a Long Term Evolution Positioning Protocol Packet Data Unit (LPP PDU) of the MO-LR request message, and sending the MO-LR request message to the network device.

16. The method of claim 12 or 13, further comprising:
receiving a Long Term Evolution Positioning Protocol (LPP) request capability message sent by the network device, wherein the LPP request capability message is configured to request the communication device to report the parameter information.

17. The method of claim 16, wherein reporting the parameter information to the network device comprises:
reporting the parameter information to the network device through an LPP Provide capability message.

18. The method of claim 14 or 17, further comprising:
receiving an LPP request location information message sent by the network device, wherein the LPP request location information message is configured to request the communication device to report a known position of the communication device and/or antenna information of the communication device.

19. The method of claim 18, further comprising:
reporting the known position of the communication device and/or the antenna information of the communication device to the network device.

20. The method of claim 19, wherein reporting the known position of the communication device and/or the antenna information of the communication device to the network device comprises:
reporting the known position of the communication device and/or the antenna information of the communication device to the network device through an LPP provide location information message.

21. The method of any one of claims 12-20, wherein the communication device comprises a user equipment (UE) or a PRU.

22. An apparatus based on a reporting method, comprising:
a receiving module, configured to receive parameter information reported by a communication device, wherein the parameter information comprises indication information and/or capability information, and the indication information is configured to indicate that the communication device is a positioning reference unit (PRU).

23. An apparatus based on a reporting method, comprising:
a reporting module, configured to report parameter information to a network device, wherein the parameter information comprises indication information and/or capability information, and the indication information is configured to indicate that the communication device is a positioning reference unit (PRU).

24. A communication device comprising a processor and a memory having a computer program stored thereon, wherein the processor executes the computer program to cause the communication device to implement the method of any one of claims 1-11.

25. A communication device comprising a processor and a memory having a computer program stored thereon, wherein the processor executes the computer program to cause the communication device to implement the method of any one of claims 12-21.

26. A communication device comprising a processor and an interface circuit, wherein
the interface circuit is configured to receive code instructions and transmit the code instructions to the processor; and
the processor is configured to run the code instructions to implement the method of any one of claims 1-11.

27. A communication device comprising a processor and an interface circuit, wherein
the interface circuit is configured to receive code instructions and transmit the code instructions to the processor; and
the processor is configured to run the code instructions to implement the method of any one of claims 12-21.

28. A computer readable storage medium for storing instructions, wherein when the instructions are executed, the method of any one of claims 1-11 is implemented.

29. A computer readable storage medium for storing instructions, wherein when the instructions are executed, the method of any one of claims 12-21 is implemented.
